# EUROPEAN PATENT APPLICATION

(11) **EP 4 792 630 A1**
(43) Date of publication of application: **19.08.2026**
(21) Application number: 26156219.3
(22) Date of filing: 04.02.2026
(51) Int. Cl.: A01B 63/00, A01D 34/54, A01D 41/14

(54) **GAUGE WHEEL SYSTEM FOR AN AGRICULTURAL HEADER**

(30) Priority: 12.02.2025 US 202519052201
(71) Applicant: CNH Industrial Belgium N.V., 8210 Zedelgem (BE); CNH Industrial America LLC, New Holland, PA 17557 (US); CNH Industrial Brasil Ltda., 32.210-900 Contagem - Minas Gerais (BR)
(72) Inventor: van Vooren, Sandor, 8210 Zedelgem (BE); Tuleski Riechi De Souza, Vinicius, 34006-049 Nova Lima, MG (BR); Trowbridge, Jeffrey C., New Holland, 17557 (US)
(74) Representative: CNH Industrial IP Department

(57) **Abstract**

A gauge wheel system for an agricultural header includes a gauge wheel arm assembly configured to rotatably support a gauge wheel and pivotally couple to a header frame of the agricultural header. The gauge wheel system also includes a bell crank configured to pivotally couple to the header frame and a damper pivotally coupled to the gauge wheel arm assembly and the bell crank. The damper is configured to urge the gauge wheel arm assembly to pivot downwardly relative to the header frame while the gauge wheel arm assembly is in a ground-engaging position. The gauge wheel system also includes an actuator coupled to the bell crank and configured to couple to the header frame. The actuator is configured to drive the bell crank to rotate to move the gauge wheel arm assembly between a ground-engaging position and a storage position.

## Description

### BACKGROUND

The present disclosure relates generally to a gauge wheel system for an agricultural header.

An agricultural harvester may be used to harvest agricultural crops, such as barley, beans, beets, carrots, corn, cotton, flax, oats, potatoes, rye, soybeans, wheat, or other plant crops. The agricultural harvester may include a header, which may be configured to efficiently harvest certain types of crops that include grain (e.g. barley, corn, flax, oats, rye, wheat, etc.). During operation of the agricultural harvester, the header may remove the crops from a field.

Certain headers include a cutter bar assembly configured to cut a portion of each crop (e.g., a stalk), thereby separating crop material from the soil. The cutter bar assembly may extend along a substantial portion of the width of the header at a forward end of the header. The header may also include an auger positioned behind the cutter bar assembly relative to the direction of travel of the harvester. The auger is configured to transport the crop material toward an inlet of the processing system. Certain headers include a reel assembly configured to direct the crop material from the cutter bar assembly toward the auger, thereby substantially reducing the possibility of the crop material falling onto the surface of the field.

Certain headers include a gauge wheel assembly configured to control a cutting height of the header during operation. The gauge wheel assembly, or multiple gauge wheel assemblies, may be positioned behind the header frame and configured to support the header frame. During operation of the agricultural harvester, the gauge wheels contact the ground and maintain the cutting height of the header.

### BRIEF DESCRIPTION

In certain embodiments, a gauge wheel system for an agricultural header includes a gauge wheel arm assembly configured to rotatably support a gauge wheel and pivotally couple to a header frame of the agricultural header. The gauge wheel system also includes a bell crank configured to pivotally couple to the header frame and a damper pivotally coupled to the gauge wheel arm assembly and the bell crank. The damper is configured to urge the gauge wheel arm assembly to pivot downwardly relative to the header frame while the gauge wheel arm assembly is in a ground-engaging position. The gauge wheel system also includes an actuator coupled to the bell crank and configured to couple to the header frame. The actuator is configured to drive the bell crank to rotate from a lowered position to a raised position to drive the damper to move the gauge wheel arm assembly from the ground engaging position to a storage position. Further, the actuator is configured to drive the bell crank to rotate from the raised position to the lowered position to drive the damper to move the gauge wheel arm assembly from the storage position to the ground-engaging position.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a side view of an embodiment of an agricultural harvester having a header;
FIG. 2 is a front perspective view of an embodiment of a header that may be employed within the agricultural harvester of FIG. 1;
FIG. 3 is a rear perspective view of a portion of the header of FIG. 2;
FIG. 4 is a perspective view of an embodiment of a gauge wheel system that may be employed within the header of FIG. 2;
FIG. 5 is a cross-sectional view of the gauge wheel system of FIG. 4;
FIG. 6A is a side view of the gauge wheel system of FIG. 4 in an extended position;
FIG. 6B is a side view of the gauge wheel system of FIG. 4 in a retracted position; and
FIG. 7 is a bottom view of the gauge wheel system of FIG. 4.

### DETAILED DESCRIPTION

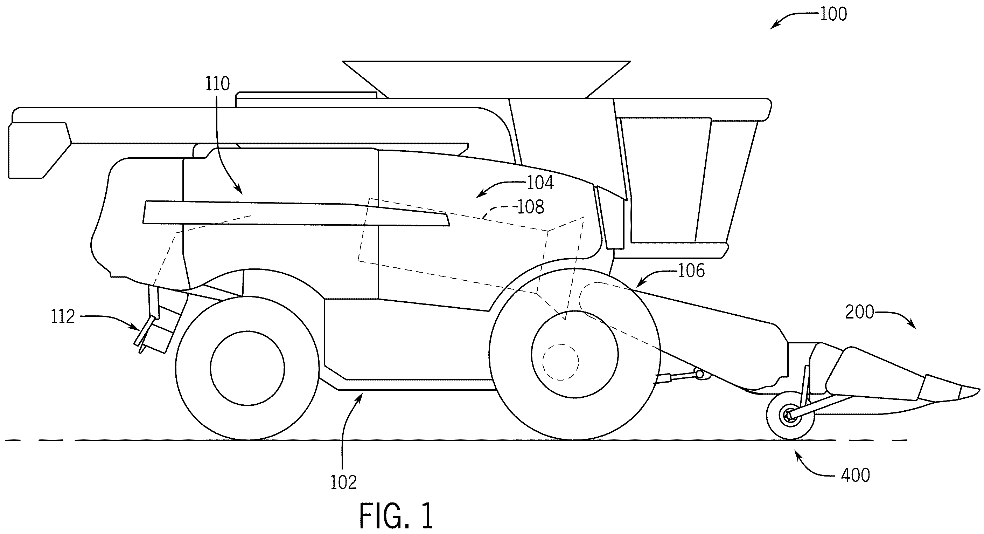

FIG. 1 is a side view of an embodiment of an agricultural harvester 100 having a header 200 (e.g., agricultural header). The agricultural harvester 100 includes a chassis 102 configured to support the header 200 and an agricultural crop processing system 104. As described in greater detail below, the header 200 is configured to cut crops and to transport the resulting crop material (e.g., cut crops) toward an inlet 106 of the agricultural crop processing system 104 for further processing of the crop material. The agricultural crop processing system 104 receives the crop material from the header 200 and separates desired crop material from crop residue. For example, the agricultural crop processing system 104 may include a thresher 108 having a cylindrical threshing rotor that transports the crop material in a helical flow path through the harvester 100. In addition to transporting the crop material, the thresher 108 may separate certain desired crop material (e.g., grain) from the crop residue, such as husks and pods, and enable the desired crop material to flow into a cleaning system located beneath the thresher 108. The cleaning system may remove debris from the desired crop material and transport the desired crop material to a storage compartment within the harvester 100. The crop residue may be transported from the thresher 108 to a crop residue handling system 110, which may remove the crop residue from the harvester 100 via a crop residue spreading system 112 positioned at the aft end of the harvester 100.

As discussed in detail below, the header 200 includes a cutter bar assembly configured to cut the crops within the field. In certain embodiments, the header 200 also includes a reel assembly configured to urge crop material from the cutter bar assembly to an auger that conveys the crop material toward the inlet 106 of the agricultural crop processing system 104. The auger includes a shaft and a flighting extending radially outwardly from the shaft. The auger may be driven to rotate, thereby driving the flighting to rotate. The rotating flighting engages the crop material and moves the crop material toward the inlet to the agricultural crop processing system.

In addition, as discussed in detail below, the header 200 includes a gauge wheel system 400 configured to support the header with respect to the ground. The gauge wheel system 400 is coupled to a rear portion of a frame of the header 200. When the gauge wheel system 400 is deployed, a gauge wheel of the gauge wheel system engages the ground, thereby establishing the header height with respect to the ground. Furthermore, the gauge wheel system 400 includes components configured to adjust the position of the gauge wheel with respect to the header. For example, the gauge wheel system includes an actuator configured to move the gauge wheel from the illustrated ground-engaging position to a storage position, such that the gauge wheel is positioned to not engage the ground. Further, the gauge wheel system 400 enables the cutting height of the header 200 to be adjusted by an operator of the agricultural harvester 100. In certain embodiments, the gauge wheel system 400 includes a height adjustment mechanism 420 configured to adjust a height of the gauge wheel relative to the frame of the header, such that the overall height of the header is altered due to the gauge wheel height adjustment. Moreover, in certain embodiments, the gauge wheel system 400 includes a damper configured to enable the gauge wheel to follow ground profile changes during harvesting. As a result of the aforementioned capabilities of the gauge wheel system 400, the efficiency of the harvesting operation may be increased by reducing the duration sufficient to alter the position of the gauge wheel with respect to the header (e.g., moving the gauge wheel between the ground-engaging position and the storage position). Additionally, due to the configuration of the gauge wheel system 400, the cost, manufacturing complexity, and weight of the header may be reduced (e.g., as compared to a gauge wheel system employing a complex and heavy purely hydraulic system to perform the functions described herein).

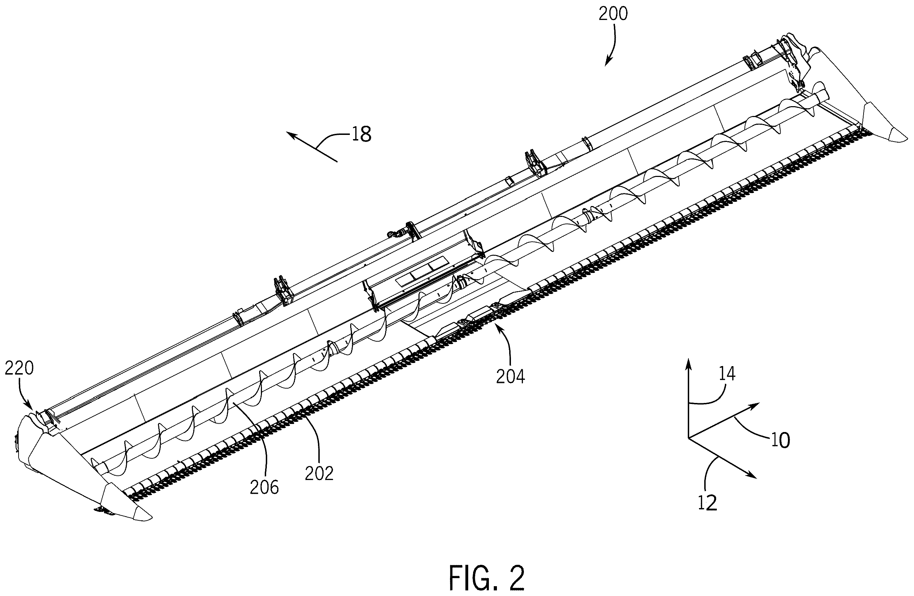

FIG. 2 is a front perspective view of an embodiment of a header 200 that may be employed within the agricultural harvester of FIG. 1. In the illustrated embodiment, the header 200 includes a cutter bar assembly 202 configured to cut a portion of each crop (e.g., a stalk), thereby separating the crop from the soil. The cutter bar assembly 202 is positioned at a forward end of the header 200 with respect to a longitudinal axis 10 of the header 200. As illustrated, the cutter bar assembly 202 extends along a substantial portion of the width of the header 200 (e.g., the extent of the header 200 along a lateral axis 10). The cutter bar assembly includes one or more blade supports, a stationary guard assembly, and a moving blade assembly. The moving blade assembly is fixed to the blade support(s) (e.g., above the blade support(s) with respect to a vertical direction 14 of the header 200), and the blade support(s)/moving blade assembly is driven to oscillate relative to the stationary guard assembly. In the illustrated embodiment, the blade support(s)/moving blade assembly is driven to oscillate by a knife drive 204 positioned at the lateral center of the header 200. As the harvester moves through a field, the cutter bar assembly 202 engages crops within the field, and the moving blade assembly cuts the crops (e.g., the stalks of the crops) in response to engagement of the cutter bar assembly 202 with the crops.

In the illustrated embodiment, the header 200 includes an auger 206 configured to rotate. The auger 206 may be driven to rotate by any suitable drive mechanism, such as an electric motor or a hydraulic motor. The auger 206 includes flighting configured to engage the cut crops and to drive the cut crops laterally inwardly as the auger 206 rotates.

In certain embodiments, the crop material (e.g., cut crops) cut by the cutter bar assembly 202 are directed toward the auger 206 by a reel assembly. The reel assembly may include a reel having multiple tines. The reel assembly may also include a rotating structure that is driven to rotate (e.g., by one or more electric motors, by one or more hydraulic motors, etc.). Furthermore, the reel may include multiple bat tubes rotatably coupled to the rotating structure, and a respective set of tines may be coupled to each bat tube. The reel assembly may include tine rotation mechanism(s) (e.g., cam and follower assembly/assemblies or parallel state assembly/assemblies). Each tine rotation mechanism is configured to drive the bat tubes to rotate relative to the rotating structure (e.g., in response to rotation of the rotating structure). Accordingly, the tines rotate in a first pattern (e.g., circular pattern) about the rotational axis of the rotating structure and in second patterns (e.g., circular patterns or oscillating patterns) about the rotational axes of respective bat tubes. The tines are configured to engage the crop material and to urge the crop material to move toward the auger. In response to engagement with the flighting of the auger 206, the agricultural material is driven laterally inwardly, thereby enabling the agricultural material to move to the inlet of the agricultural crop processing system.

In the illustrated embodiment, the header 200 includes a frame 220 configured to support the cutter bar assembly 202, the auger 206, the reel assembly, and other components of the header. In certain embodiments, the frame 220 includes one or more top frame members and one or more bottom frame members. Furthermore, in certain embodiments, the frame may include one or more support members coupled to a top frame member and to a respective bottom frame member. While the gauge wheel system is disclosed herein with regard to a header having an auger, the gauge wheel system disclosed herein may be employed within any other suitable type of header, such as a header with one or more belts that convey the cut crops to the opening of the header.

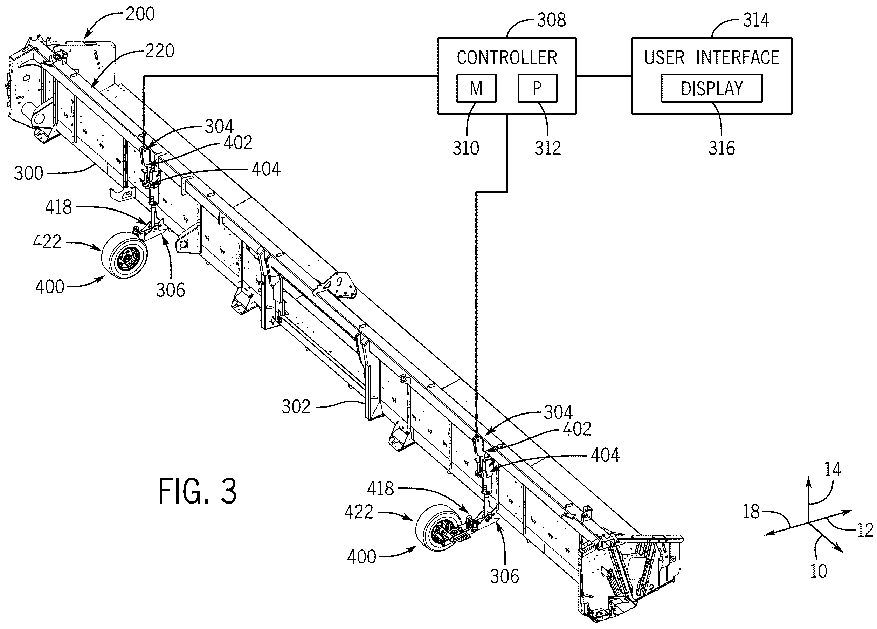

FIG. 3 is a rear perspective view of a portion of the agricultural header 200 of FIG. 2. The agricultural header 200 includes two gauge wheel systems 400, in which one gauge wheel system 400 is positioned on a left side 300 of the header frame 220 and one gauge wheel system 400 is positioned on a right side 302 of the header frame 220. For clarity, certain elements of the agricultural header 200 (e.g. the cutter bar assembly and the auger) are not shown. As shown, each gauge wheel system 400 is coupled to the header frame 220 via two mounts. As discussed above, the frame 220 includes a top frame member and a bottom frame member that establish a portion of the frame 220. In the illustrated embodiment, each gauge wheel system 400 is coupled to the top frame member of the frame 220 via a first mount 304. As displayed, the first mount 304 is coupled to the top member of the frame 220, and the first mount 304 enables an appropriate fastener (e.g., a pin, a screw, a bolt, etc.) to pivotally couple an actuator 402 of the gauge wheel system 400 to the first mount 304, thereby pivotally coupling the actuator 402 to the frame 220. Further, the first mount 304 is pivotally connected to a bell crank 404 of the gauge wheel system 400, thereby pivotally coupling the bell crank 404 to the frame 220. Accordingly, the connection between the first mount 304 and the bell crank 404 enables rotation of the bell crank 404 about the lateral axis 10. The pivotal connection between the bell crank and the first mount may be established by any appropriate fastener(s).

In the illustrated embodiment, the gauge wheel system 400 is connected to a bottom frame member of the frame 220 by a second mount 306. As shown, the second mount 306 is coupled to the bottom member of the frame 220 and enables an appropriate fastener to pivotally couple a gauge wheel arm assembly 418 of the gauge wheel system 400 to the second mount 306, thereby pivotally coupling the gauge wheel arm assembly 418 to the frame 220. The gauge wheel arm assembly 418 is pivotally connected to the second mount 306 to enable rotation about the lateral axis 10. The pivotal connection between the gauge wheel arm assembly and the second mount may be established by any appropriate fastener(s). While each gauge wheel system 400 is coupled to the frame 220 of the header 200 by two mounts in the illustrated embodiment, in other embodiments, at least one gauge wheel system may be coupled to the header frame by more or fewer mounts (e.g., 1, 3, 4, or more).

As previously discussed, the ability to achieve certain gauge wheel positions via control from the cab of the agricultural harvester (e.g. remotely) may increase harvesting efficiency. In the illustrated embodiment, a controller 308 is communicatively coupled to the actuator 402 of each gauge wheel system 400 to control the extension and retraction of the actuator. In certain embodiments, the controller 308 is an electronic controller having electrical circuitry configured to control the actuators 402. In the illustrated embodiment, the controller 308 includes a processor 312, such as a microprocessor, and a memory device 310. The controller 308 may also include one or more storage devices and/or other suitable components. The processor 312 may be used to execute software, such as software for controlling the actuators 402, and so forth. Moreover, the processor 312 may include multiple microprocessors, one or more "general-purpose" microprocessors, one or more special-purpose microprocessors, and/or one or more application specific integrated circuits (ASICs), or some combination thereof. For example, the processor 312 may include one or more reduced instruction set (RISC) processors.

The memory device 310 may include a volatile memory, such as random access memory (RAM), and/or a nonvolatile memory, such as read-only memory (ROM). The memory device 310 may store a variety of information and may be used for various purposes. For example, the memory device 310 may store processor-executable instructions (e.g., firmware or software) for the processor 312 to execute, such as instructions for controlling the actuators 402. The storage device(s) (e.g., nonvolatile storage) may include ROM, flash memory, a hard drive, or any other suitable optical, magnetic, or solid-state storage medium, or a combination thereof. The storage device(s) may store data, instructions (e.g., software or firmware for controlling the actuators 402, etc.), and any other suitable data.

In the illustrated embodiment, the controller 308 is communicatively coupled to a user interface 314. The user interface 314 is configured to receive input from an operator and to provide information to the operator. As such, the user interface 314 may be present within the cab of the agricultural harvester (e.g., the agricultural harvester 100 of FIG. 1). For example, the user interface may provide the operator with options for controlling the positioning of the gauge wheel systems 400 (e.g., from the cab of the agricultural harvester). As such, the user interface 314 may include any suitable input device(s) for receiving input, such as a keyboard, a mouse, button(s), switch(es), knob(s), other suitable input device(s), or a combination thereof. In addition, the user interface 314 may include any suitable output device(s) for presenting information to the operator, such as speaker(s), indicator light(s), other suitable output device(s), or a combination thereof. In the illustrated embodiment, the user interface 314 includes a display 316 configured to present visual information to the operator. In certain embodiments, the display 316 may include a touchscreen interface configured to receive input from the operator.

An operator may provide input(s) to the user interface 314 to control the position of gauge wheels 422 of the gauge wheel systems 400. As a result, the operator may remain within the cab of the agricultural harvester while adjusting the position of the gauge wheels 422, thereby increasing the overall efficiency of the harvesting process. In certain harvesting operations, the gauge wheels 422 may be in a ground-engaging position or a storage position. To achieve the ground-engaging position, the operator may provide an input to the user interface 314, and the user interface 314 may output a corresponding signal to the controller 308. The controller 308, in turn, may control the actuators 402 to extend, thereby rotating the bell cranks downwardly. As a result, the gauge wheels 422 may be lowered (e.g., opposite the vertical direction 14) with respect to the frame 220, such that the gauge wheels 422 contact the ground. To achieve the storage position, the operator may provide an input to the user interface 314, and the user interface 314 may output a corresponding signal to the controller 308. The controller 308, in turn, may control the actuators 402 to retract, thereby rotating the bell cranks upwardly. As a result, the gauge wheels 422 may rise (e.g., in the vertical direction 14) with respect to the frame 220, such that the gauge wheels 422 do not contact the ground. In certain embodiments, the operator may control the amount the actuators 402 extend/retract by providing additional input to the user interface 314 (e.g., by providing a numerical input corresponding to a length to extend/retract), which may cause the actuators 402 to attain the position indicated by the operator. While the header 200 includes two gauge wheels systems 400 in the illustrated embodiment, in other embodiments, the header may include more or fewer gauge wheel systems (e.g., 1, 3, 4, or more).

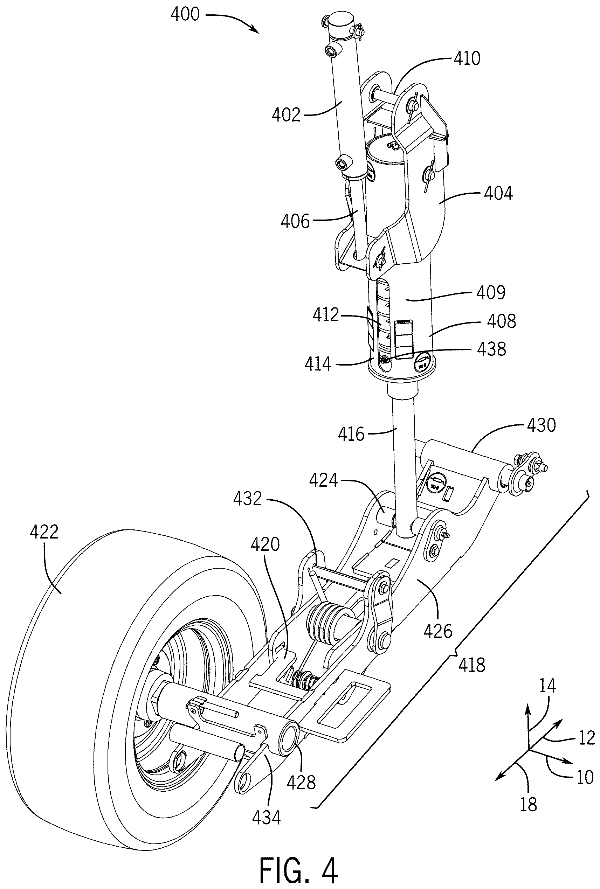

FIG. 4 is a perspective view of an embodiment of a gauge wheel system 400 that may be employed within the header of FIG. 2. The gauge wheel system 400 includes an actuator 402, which is pivotally connected to the top member of the header frame and to the bell crank. The actuator 402 may include any suitable type(s) of actuation device(s) configured to drive the bell crank to rotate, such as hydraulic cylinder(s), pneumatic cylinder(s), electric linear actuator(s), other suitable type(s) of actuation device(s), or a combination thereof. In certain embodiments, the actuator includes rotary actuator(s) (e.g., electric motor(s), hydraulic motor(s), pneumatic motor(s), etc.) non-pivotally coupled to the header frame and to the bell crank.

In the illustrated embodiment, the actuator 402 includes a rod 406 that is pivotally coupled to the bell crank 404. The pivotal connection between the rod 406 and the bell crank 404 may be any suitable type of pivotal connection that enables the actuator 402 to drive the bell crank 404 to rotate. In the illustrated embodiment, the bell crank 404 includes two L-shaped members coupled to an axle 410, a housing 408 of the damper 409, and the rod 406. The bell crank 404 is pivotally coupled to the frame of the agricultural header via the axle 410 to enable the bell crank to pivot relative to the frame. The actuator 402 is configured to extend and retract the rod 406 to drive the bell crank 404 to pivot about the axle 410 between the illustrated lowered position and a raised position. In addition, the housing 408 of the damper 409 is pivotally coupled to the bell crank 404. While the bell crank 404 includes the two L-shaped members in the illustrated embodiment, in other embodiments, the bell crank may include other and/or additional suitable components.

In the illustrated embodiment, the axle 410 is positioned directly above the housing 408, which has a cylindrical shape. Further, the bell crank 404 is pivotally coupled to the housing 408 at a top portion of the housing by a fastener, and the L-shaped members of the bell crank are positioned on opposite lateral sides of the housing. Upon retraction of the rod 406 of the actuator 402, the bell crank 404 is driven to pivot from the illustrated lowered position to the raised position, thereby driving the damper 409 to move upwardly (e.g., with respect to the vertical direction 14) and to tilt forwardly (e.g., such that a top portion of the damper moves in the direction 18, opposite to the direction 12), which moves the gauge wheel arm assembly 418 from a ground-engaging position to a storage position.

The damper 409 includes a spring 412 disposed within the housing 408. The spring 412 is configured to urge the gauge wheel arm assembly 418 to pivot downwardly relative to the header frame while the gauge wheel arm assembly 418 is in the ground-engaging position. The force provided by the spring 412 enables the gauge wheel 422 to follow the contours of the terrain while maintaining contact with the ground during harvesting. In the illustrated embodiment, the spring 412 includes a single coil spring. However, in other embodiments, the spring may include any suitable type(s) of spring(s) (e.g., alone or in combination with the single coil spring), such as additional coil spring(s), pneumatic cylinder(s), resilient member(s), etc. In the illustrated embodiment, the compression and expansion of the spring 412 is limited by a stroke-limiting slot 414 within the housing 408, in which movement of a pin 438 coupled to a lower end of the spring is limited to the bounds of the slot. The spring 412 is further coupled to a rod 416 of the damper 409, and the rod 416 of the damper 409 is pivotally coupled to the gauge wheel arm assembly 418. The bottom of the rod 416 has a hole through which a pin 424 of the gauge wheel arm assembly 418 pivotally couples the damper 409 to the gauge wheel arm assembly 418. The pin 424 enables the rod 416 to pivot relative to the gauge wheel arm assembly 418, such that the aforementioned forward and backward tilt of the damper 409 is enabled. While the housing 408 has the stroke-limiting slot 414 in the illustrated embodiment, in other embodiments, the stroke limiting slot may be omitted, and/or the gauge wheel system may include another suitable assembly configured to limit compression and expansion of the spring.

In the illustrated embodiment, the gauge wheel arm assembly 418 includes a first arm 426 and a second arm 428. The first arm 426 is pivotally coupled to the frame of the agricultural header via a pin 430 that enables the gauge wheel arm assembly 418 to pivot about a lateral axis 10 (e.g., upwardly and downwardly). For example, to transition the gauge wheel system 400 from the illustrated ground-engaging configuration to a storage configuration, an operator may provide input to the user interface indicative of instructions to transition the gauge wheel assembly to the storage configuration, the user interface may output a signal to the controller indicative of the instructions, and the controller, in turn, may control the actuator 402 to retract the rod 406, such that the rod 406 drives the bell crank 404 in an upward direction from the illustrated lower position to the raised position, thereby driving the damper 409 to move the first arm 426 to rotate upwardly about the connection via the pin 430. As a result, the gauge wheel arm assembly 418 moves from the illustrated ground-engaging position to the storage position.

In the illustrated embodiment, the second arm 428 of the gauge wheel arm assembly 418 is pivotally coupled to the first arm 426. In addition, the gauge wheel arm assembly 418 includes a torsion spring 432 configured to urge the second arm 428 to rotate upwardly relative to the first arm 426. As illustrated, the torsion spring 432 is disposed about an axle that pivotally couples to the first and second arms to one another. The torsion spring 432 has a first end engaged with a vertically protruding member of the second arm 428 and a second end engaged with a portion of the first arm 426. As such, the torsion spring 432 urges the second arm 428 to rotate upwardly, thereby facilitating adjustment of the height adjustment mechanism 420. Although the gauge wheel arm assembly 418 includes the torsion spring 432 in the illustrated embodiment, in other embodiments, the torsion spring may be omitted, and/or the gauge wheel assembly may include another suitable biasing element configured to urge the second arm to rotate upwardly with respect to the first arm, such as a coil spring or a spring belt.

In the illustrated embodiment, the height adjustment mechanism 420 of the gauge wheel system 400 is positioned rearward of the torsion spring 432. The height adjustment mechanism 420 is configured to facilitate adjustment of an orientation of the second arm 428 with respect to the first arm 426. For example, the second arm 428 may be positioned at multiple discrete angles relative to the first arm 426. Further, in the illustrated embodiment, the distal end of the second arm 428 provides an attachment point for the gauge wheel 422. The second arm 428 has a cavity 434 configured to receive an axle of the gauge wheel 422, thereby rotatably coupling the gauge wheel 422 to the second arm 428 of the gauge wheel arm assembly 418. While the second arm 428 includes the cavity 434 in the illustrated embodiment, in certain embodiments, the second arm may accommodate the axle by way of a through hole.

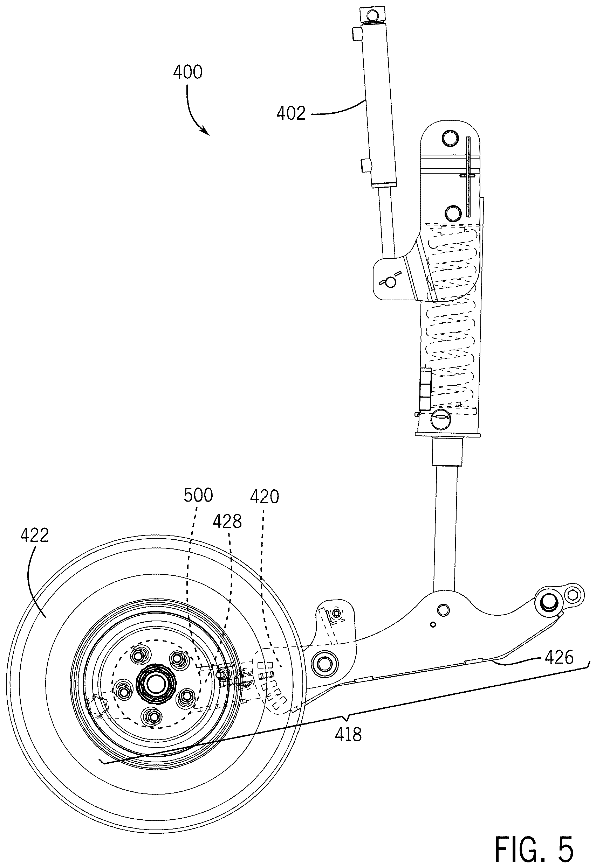

FIG. 5 is a cross-sectional side view of the gauge wheel system 400 of FIG. 4. As previously mentioned, the height adjustment mechanism 420 enables the orientation of the second arm 428 to be adjusted relative to the first arm 426, thereby adjusting the height of the frame of the header relative to the ground, which adjusts cutting height of the cutter bar assembly of the header. For example, as illustrated, the actuator 402 is fully extended such that the gauge wheel system 400 is in the ground-engaging configuration. With the gauge wheel system 400 in the ground-engaging configuration, the gauge wheel 422 may be repositioned by the height adjustment mechanism 420 to raise or lower the header frame relative to the ground, thereby adjusting the cutting height of the cutter bar assembly of the header.

In the illustrated embodiment, the height adjustment mechanism 420 includes multiple notches in the distal end of the first arm 426 and a height adjustment handle 500 having a protrusion configured to engage each of the notches. In the illustrated embodiment, the distal end of the first arm 426 has a circular sector shape, and the notches are arranged generally vertically along the first arm 426, following the profile of the circular sector shape. Furthermore, in the illustrated embodiment, the second arm 428 has a slot, and the protrusion of the height adjustment handle 500 extends through the slot. The protrusion of the height adjustment handle extends through one notch of the first arm 426 and the slot of the second arm 428 while the handle is in an engaged position, thereby blocking rotation of the second arm 428 relative to the first arm 426. The height adjustment handle 500 is movably coupled to the second arm 428 and configured to move from the engaged position to a disengaged position relative to the second arm 428. While the height adjustment handle 500 is in the disengaged position, the protrusion is disengaged from each notch of the first arm 426, thereby enabling rotation of the second arm 428 relative to the first arm 426. The height adjustment mechanism 420 enables the operator to choose a different notch by using the height adjustment handle to reposition the second arm 428. For example, the operator may move the height adjustment handle 500 to the disengaged position, rotate the second arm 428 to a desired orientation (e.g., with assistance from the torsion spring), and move the height adjustment handle 500 to the engaged position, thereby engaging the protrusion with a respective notch. As such, the gauge wheel 422 may be positioned at a desired height with respect to the frame of the header, thereby establishing a desired height of the cutter bar assembly.

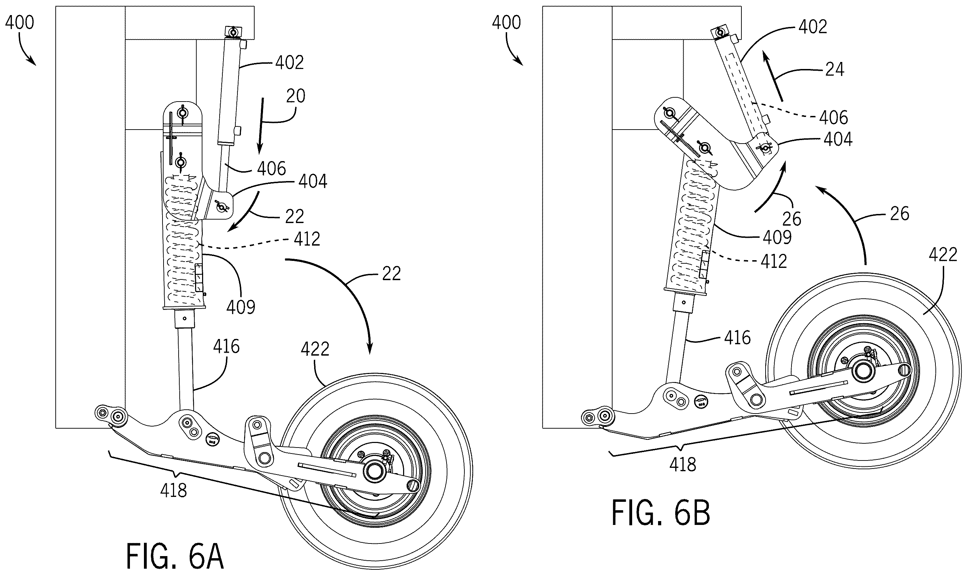

FIGS. 6A and 6B are side views of the gauge wheel system 400 of FIG. 4. The actuator 402 is configured to drive the bell crank 404 to rotate such that the gauge wheel system may be transitioned to the storage configuration or the ground-engaging configuration. With the gauge wheel system 400 in the storage configuration, the gauge wheel 422 is positioned above the ground for transport (e.g., such that the gauge wheel does not engage windrows of crop during transport). Furthermore, with the gauge wheel system in the ground-engaging configuration, the gauge wheel 422 engages the ground for harvesting.

FIG. 6A is a side view of the gauge wheel system 400 of FIG. 4 in an extended position, or a harvesting configuration. As illustrated, the actuator 402 is fully extended. As the rod 406 extends in a downward direction 20, the actuator 402 drives the bell crank 404 to rotate in a clockwise direction 22 from the raised position to the illustrated lowered position. As the bell crank 404 rotates in the clockwise direction 22, the damper 409 moves downwardly with respect to the header frame. As a result, the gauge wheel arm assembly 418 rotates downwardly in the clockwise direction 22 from the storage position to the ground-engaging position, thereby positioning the gauge wheel 422 in the illustrated ground engaging position.

FIG. 6B is a side view of the gauge wheel system 400 of FIG. 4 in a retracted position, or storage configuration. As illustrated, the actuator 402 is fully retracted. As the rod 406 retracts in an upward direction 24, the actuator 402 drives the bell crank 404 to rotate in a counter-clockwise direction 26 from the lowered position to the illustrated raised position. As the bell crank 404 rotates in the counter-clockwise direction 26, the damper 409 moves upwardly and tilts forwardly relative to the header frame. As a result, the gauge wheel arm assembly 418 rotates upwardly in the counter-clockwise direction 26 from the ground-engaging position to the storage position, thereby positioning the gauge wheel 422 in the illustrated storage position.

As previously discussed, in certain embodiments, the actuator 402 is communicatively coupled to the controller such that the actuator may be controlled by an operator of the agricultural harvester (e.g., from a remote position, such as within the cab). For example, the operator may desire to transition the gauge wheel system 400 to the storage configuration and may, therefore, provide input to the controller via the user interface indicative of instructions to transition the gauge wheel system 400 to the storage configuration. The controller, in turn, controls the actuator 402 to retract, thereby lifting the gauge wheel to the storage position, as shown in FIG. 6B. To return the gauge wheel to the ground-engaging position, the operator may provide input to the controller via the user interface indicative of instructions to transition the gauge wheel system 400 to the ground-engaging configuration. The controller, in turn, controls the actuator 402 to extend, thereby lowering the gauge wheel to the ground-engaging position, as shown in FIG. 6A. Furthermore, in certain embodiments, the controller may be configured to control a single gauge wheel system of the agricultural harvester or multiple gauge wheel systems of the agricultural harvester. Furthermore, in certain embodiments, the actuator 402 of the gauge wheel system may be controlled by a valve that may be manually actuated from a remote location (e.g., within the cab of the agricultural harvester).

As previously discussed, during harvesting operation, the agricultural harvester may traverse uneven terrain. As such, the damper 409 urges the gauge wheel 422 to remain in contact with the ground. For example, the agricultural harvester may move from terrain having one elevation to terrain having a lower elevation. As such, the spring 412 urges the rod 416 downwardly to keep the gauge wheel 422 in contact with the ground. Furthermore, the spring 412 may serve as a damping mechanism for the gauge wheel system 400 by absorbing excessive forces imparted by uneven terrain onto the system during harvesting.

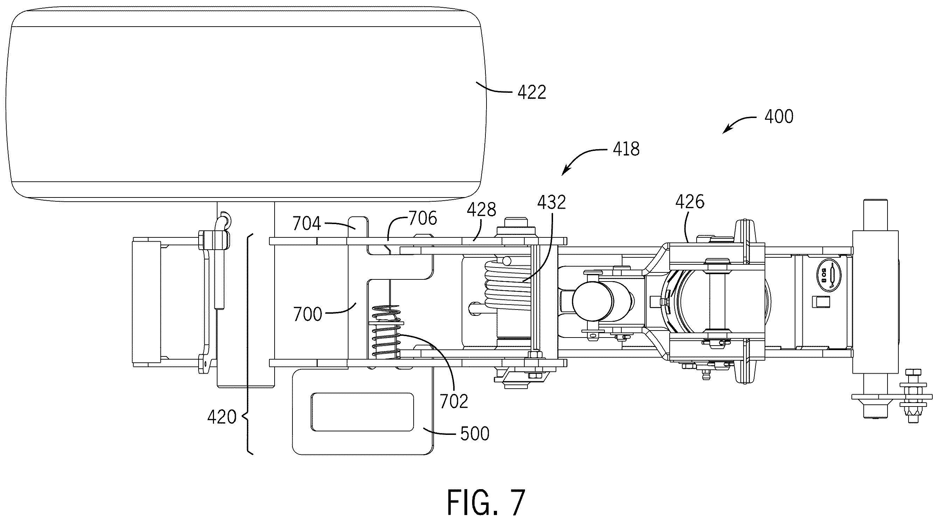

FIG. 7 is a bottom view of the gauge wheel system 400 of FIG. 4. As previously discussed, the height adjustment mechanism 420 includes the height adjustment handle 500. In the illustrated embodiment, the height adjustment handle 500 includes the protrusion 700 configured to engage a desired notch of the first arm 426 of the gauge wheel arm assembly 418, thereby adjusting the orientation of the second arm 428 relative to the first arm 426, which adjusts the height of the gauge wheel 422 relative to the harvester frame. Further, a handle spring 702 is configured to urge the height adjustment handle toward the engaged position. As such, an operator may use force to pull the height adjustment handle 500 to the disengaged position, rotate the second arm 428 relative to the first arm 426 using the height adjustment handle 500 such that the protrusion is aligned with a desired notch, and release the height adjustment handle 500 to enable the handle spring 702 to drive the height adjustment handle 500 to the engaged position. Further, the height adjustment handle 500 includes a retaining rod 704 that movably couples the height adjustment handle 500 to the second arm 428. Moreover, the retaining rod 704 may include a second protrusion 706 attached thereon to further facilitate the coupling of the second arm 428 to the first arm 426. In certain embodiments, the second protrusion may be omitted.

As previously mentioned, the torsion spring 432 is configured to urge the second arm 428 to rotate upwardly with respect to the first arm 426. In the illustrated embodiment, the torsion spring 432 has one end engaged with a bottom of the first arm 426 and the other end engaged with the vertically protruding member of the second arm 428. While the height adjustment mechanism 420 includes the handle having the protrusion in the illustrated embodiment, in other embodiments, the height adjustment mechanism may include other suitable device(s) (e.g., alone or in combination with the handle) to facilitate adjustment of the orientation of the second arm relative to the first arm (e.g., a fastener assembly, a friction adjustment assembly, etc.). Furthermore, in certain embodiments, the height adjustment mechanism may be omitted. In such embodiments, the gauge wheel arm assembly may have a single arm. Moreover, in certain embodiments, the actuator and/or the damper may be omitted.

## Claims

1. A gauge wheel system (400) for an agricultural header (200), comprising:
a gauge wheel arm assembly (418) configured to rotatably support a gauge wheel (422), wherein the gauge wheel arm assembly (418) is configured to pivotally couple to a header frame (220) of the agricultural header (200);
a bell crank (404) configured to pivotally couple to the header frame (220);
a damper (409) pivotally coupled to the gauge wheel arm assembly (418) and to the bell crank (404), wherein the damper (409) is configured to urge the gauge wheel arm assembly (418) to pivot downwardly relative to the header frame (220) while the gauge wheel arm assembly (418) is in a ground-engaging position; and
an actuator (402) coupled to the bell crank (404) and configured to couple to the header frame (220), wherein the actuator (402) is configured to drive the bell crank (404) to rotate from a lowered position to a raised position to drive the damper (409) to move the gauge wheel arm assembly (418) from the ground-engaging position to a storage position, and the actuator (402) is configured to drive the bell crank (404) to rotate from the raised position to the lowered position to drive the damper (409) to move the gauge wheel arm assembly (418) from the storage position to the ground-engaging position.

2. The gauge wheel system of claim 1, wherein the damper (409) comprises a housing (408) and a spring (412) disposed within the housing (408).

3. The gauge wheel system of claim 2, wherein the housing (408) is configured to limit a compression and/or expansion of the spring (412).

4. The gauge wheel system according to any of the previous claims, wherein the gauge wheel arm assembly (418) comprises:
a first arm (426) pivotally coupled to the damper (409); and
a second arm (428) pivotally coupled to the first arm (426) and configured to support the gauge wheel (422).

5. The gauge wheel system of claim 4, wherein the gauge wheel arm assembly (418) comprises a torsion spring (432) configured to urge the second arm (428) to rotate upwardly with respect to the first arm (426).

6. The gauge wheel system of claim 4 or 5, wherein the gauge wheel arm assembly (418) comprises a height adjustment mechanism (420) configured to adjust an orientation of the second arm (428) with respect to the first arm (426).

7. The gauge wheel system of claim 6, wherein the height adjustment mechanism (420) comprises a handle (500) having a protrusion (700), wherein the handle (500) is movably coupled to the second arm (428), the handle (500) is configured to move between an engaged position and a disengaged position relative to the second arm (428), the protrusion (700) of the handle (500) is configured to engage one notch of a plurality of notches of the first arm (426) while the handle is in the engaged position to block rotation of the second arm (428) with respect to the first arm (426), and the protrusion (700) of the handle (500) is configured to disengage the plurality of notches while the handle (500) is in the disengaged position to enable rotation of the second arm (428) with respect to the first arm (426).

8. The gauge wheel system of claim 7, wherein one end of the first arm (426) has a circular sector shape, and the plurality of notches is formed within the circular sector shape.

9. The gauge wheel system of claim 7 or 8, wherein the gauge wheel arm assembly (418) comprises a spring (702) configured to urge the handle (500) towards the engaged position.

10. An agricultural harvester (100), comprising:
an agricultural header (200), comprising:
a frame (220); and
a gauge wheel system according to any of the previous claims.

11. The agricultural harvester of claim 10, wherein the gauge wheel system (400) is coupled to a rear portion of the frame (220) of the agricultural header (200).

12. The agricultural harvester of claim 10 or 11, comprising a controller (308) communicatively coupled to the actuator (402), wherein the controller (308) comprises a processor (312) and a memory device (310), and the controller (308) is configured to:
receive an input signal indicative of a position of the gauge wheel (422); and
control the actuator (402) to drive the bell crank (404) to rotate based on the input signal.
